(19) Europäisches Patentamt
European Patent Office
Office européen des brevets

(11) EP 3 716 353 A1

(12) **EUROPÄISCHE PATENTANMELDUNG**

(43) Veröffentlichungstag:
**30.09.2020 Patentblatt 2020/40**

(51) Int Cl.:
***H01M 2/10*** *(2006.01)* ***B25F 5/00*** *(2006.01)*

(21) Anmeldenummer: **19164821.1**

(22) Anmeldetag: **25.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
- **Holubarsch, Markus**
  **86899 Landsberg am Lech (DE)**
- **Schmid, Stefan**
  **86929 Untermühlhausen (DE)**
- **Koeniger, Tobias**
  **6900 Bregenz (AT)**
- **Göttlinger, Michael**
  **84034 Landshut (DE)**
- **Marsiglia, Katharina**
  **81243 München (DE)**
- **Harbaum, Julian**
  **85716 Unterschleißheim (DE)**
- **Ziegler, Bernd**
  **86830 Schabmünchen (DE)**
- **Profunser, Dieter**
  **6835 Zwischenwasser/Muntlix (AT)**
- **Meixner, Ralf**
  **87656 Germaringen (DE)**
- **Klingen, David**
  **80798 München (DE)**

(74) Vertreter: **Hilti Aktiengesellschaft**
**Corporate Intellectual Property**
**Feldkircherstrasse 100**
**Postfach 333**
**9494 Schaan (LI)**

# (54) AKKUFALLSCHUTZ

(57) Stossabsorbiervorrichtung für einen Akkumulator, insbesondere zur Versorgung einer Werkzeugmaschine mit elektrischer Energie, wobei der Akkumulator ein Gehäuse enthält zum Aufnehmen wenigstens einer Energiespeicherzelle.

Die Stossabsorbiervorrichtung enthält wenigstens ein Stossabsorbierelement zum Absorbieren einer auf das Gehäuse des Akkumulators ausgeübten Stossenergie.

Fig. 3

3
2
4
2f
1
P1
2a
P2
11
7
12
8a
12
2e
5
8b
11

EP 3 716 353 A1

**Beschreibung**

**Akkufallschutz**

Die vorliegende Erfindung betrifft ein Stossabsorbiervorrichtung für einen Akkumulator, insbesondere zur Versorgung einer Werkzeugmaschine mit elektrischer Energie, wobei der Akkumulator ein Gehäuse enthält zum Aufnehmen wenigstens einer Energiespeicherzelle.

Auf dem Markt erhältliche Akkumulatoren, auch Akku genannt, enthalten für gewöhnlich eine Vielzahl an Energiespeicherzellen, auch Akkuzellen genannt, die zum Speichern sowie zur Abgabe von elektrischer Energie dienen. Das Gehäuse des Akkumulators besteht gewöhnlich aus einer relativ harten Kunststoffschale. Bei dem harten Kunststoff kann es sich beispielsweise um Polyamid handeln.

Herkömmliche Energiespeicherzellen bzw. Akkuzellen sind relativ empfindlich und sollten vor einem plötzlich auftretenden Krafteinfluss, Stössen und dergleichen geschützt werden. Zu einem derartigen Krafteinfluss auf die Energiespeicherzellen kann es in Folge eines Sturzes bzw. Herunterfallens des Akkumulators kommen, wenn das Gehäuse des Akkumulators aus einer gewissen Fallhöhe auf eine harte, nicht elastische Oberfläche (z.B. Betonboden) aufschlägt. Hierbei kann die Stossenergie über das Akkugehäuse auf die Energiespeicherzellen übertragen werden und Schäden an den Energiespeicherzellen erzeugen.

Es ist die Aufgabe der vorliegenden Erfindung, das vorstehend genannte Problem zu lösen und insbesondere Energiespeicherzellen im Inneren eines Akkugehäuses im Falle eines Sturzes besser zu schützen.

Diese Aufgabe wird gelöst durch den Gegenstand des Anspruchs 1 sowie insbesondere durch ein Stossabsorbiervorrichtung für einen Akkumulator, insbesondere zur Versorgung einer Werkzeugmaschine mit elektrischer Energie, wobei der Akkumulator ein Gehäuse enthält zum Aufnehmen wenigstens einer Energiespeicherzelle.

Erfindungsgemäß enthält die Stossabsorbiervorrichtung wenigstens ein Stossabsorbierelement zum Absorbieren einer auf das Gehäuse des Akkumulators ausgeübten Stossenergie.

Entsprechend einer vorteilhaften Ausführungsform der vorliegenden Erfindung ist es möglich, dass sich das wenigstens eine Stossabsorbierelement von einer ersten Seitenfläche des Gehäuses des Akkumulators zu einer zweiten Seitenfläche des Gehäuses des Akkumulators erstreckt. Hierdurch kann effektiv eine Seitenkante zwischen einer ersten und zweiten Seitenfläche des Gehäuses des Akkumulators durch das Stossabsorbierelement geschützt werden. Im Falle eines Sturzes bzw. eines Herunterfalls des Akkumulators auf eine harte Oberfläche kann das plötzliche Einwirken einer Stossenergie besondere an den Seitenkanten zwischen den Seitenflächen zu einer Beschädigung an dem Gehäuse des Akkus sowie an den Energiespeicherzellen führen.

Es ist hierbei zu beachten, dass jeweils zwei aneinandergrenzende Seitenflächen im Wesentlichen in einem rechten Winkel (d.h. 90°) zueinander angeordnet sind. Es ist jedoch auch möglich, dass jeweils zwei aneinandergrenzende Seitenflächen nicht im rechten Winkel (d.h. größer oder kleiner als 90°) zueinander angeordnet sind.

Das Gehäuse des Akkumulators kann dabei sechs Seitenflächen enthalten.

Gemäß einer vorteilhaften Ausführungsform der vorliegenden Erfindung kann es möglich sein, dass das wenigstens eine Stossabsorbierelement in Form eines Bügels ausgestaltet ist.

Durch die Wahl des Werkstoffs sowie durch die besondere Formgebung des Stossabsorbierelements kann dieses plastisch oder elastisch verformbar sein.

Entsprechend einer vorteilhaften Ausführungsform der vorliegenden Erfindung ist es möglich, dass das als Bügel ausgestaltete Stossabsorbierelement ein erstes Ende sowie ein zweites Ende enthält, wobei das erste Ende an einer ersten Seitenfläche des Gehäuses und das zweite Ende an einer zweiten Seitenfläche des Gehäuses positioniert ist. Hierdurch kann ein Hohlraum bzw. Aussparung zwischen den Seitenflächen und dem Stossabsorbierelement erzeugt werden, der im Falle einer plötzlich auf das Akkugehäuse einwirkenden Stossenergie als Knautschzone bzw. als Bereich genutzt werden kann, in den sich das Stossabsorbierelement verformen kann. Durch die Verformung des Stossabsorbierelements kann Energie, insbesondere Stossenergie, absorbiert werden. Die Verformung des Stossabsorbierelements kann dabei elastisch oder plastisch erfolgen.

Gemäß einer vorteilhaften Ausführungsform der vorliegenden Erfindung kann es möglich sein, dass ein im Wesentlich konstanter Abstand zwischen der Oberfläche des Stossabsorbierelements und einer Außenoberfläche des Gehäuses des Akkumulators vorgesehen ist.

Es ist jedoch gemäß einer weiteren vorteilhaften Ausführungsform der vorliegenden Erfindung auch möglich, dass der Abstand zwischen der Oberfläche des Stossabsorbierelements und einer Außenoberfläche des Gehäuses des Akkumulators nicht konstant bzw. variable ist. Entsprechend einer vorteilhaften Ausführungsform der vorliegenden Erfindung ist es möglich, dass das als Bügel ausgestaltete Stossabsorbierelement so an dem Gehäuse positioniert ist, dass sich ein Bogenabschnitt des als Bügel ausgestaltete Stossabsorbierelements um eine Seitenkante von zwei aneinandergrenzende Seitenflächen des Gehäuses erstreckt.

Gemäß einer vorteilhaften Ausführungsform der vorliegenden Erfindung kann es möglich sein, dass das als Bügel ausgestaltete Stossabsorbierelement wenigstens zwei Teilstücke, insbesondere fünf Teilstücke, enthält, wobei jeweils zwei aneinandergrenzende Teilstücke in einem stumpfen Winkel zueinander angeordnet sind. Der stumpfe Winkel kann einen Wert zwischen 110° und 150° aufweisen. Das Teilstück kann auch als Bügelabschnitte bezeichnet werden.

Entsprechend einer vorteilhaften Ausführungsform der vorliegenden Erfindung ist es möglich, dass das als Bügel ausgestaltete Stossabsorbierelement kreisbogenförmig ausgestaltet ist.

Gemäß einer vorteilhaften Ausführungsform der vorliegenden Erfindung kann es möglich sein, dass die Stossabsorbiervorrichtung mit dem wenigstens einen Stossabsorbierelement fest mit dem Gehäuse des Akkumulators, bzw. integraler Bestandteil des Gehäuses des Akkumulators ist. Durch die feste (d.h. nicht lösbare) Verbindung der Stossabsorbiervorrichtung mi dem Gehäuse des Akkumulators kann eine hohe Festigkeit bzw. Robustheit die Stossabsorbiervorrichtung erzeugt werden. Die feste Verbindung kann durch einen gemeinsamen Verguss bzw. Gießvorgang zur Herstellung des Akkugehäuses und der Stossabsorbiervorrichtung. Dies ist insbesondere möglich, wenn das Akkugehäuse und die Stossabsorbiervorrichtung aus demselben Werkstoff (z.B. Polycarbonat oder Polyamid) hergestellt sind.

Alternativ und gemäß einer weiteren vorteilhaften Ausführungsform der vorliegenden Erfindung kann es möglich sein, dass die Stossabsorbiervorrichtung mit dem wenigstens einen Stossabsorbierelement nicht fest, sondern wieder lösbar mit dem Gehäuse des Akkumulators ist. Eine nicht feste und wiederlösbare Verbindung kann beispielsweise durch eine Schraubverbindung erreicht werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Figur 1a eine perspektivische Ansicht auf einen Akkumulator mit einem Gehäuse, einer erfindungsgemäßen Stossabsorbiervorrichtung und Stossabsorbierelementen;

Figur 2 eine Seitenansicht auf den Akkumulator mit dem Gehäuse, der erfindungsgemäßen Stossabsorbiervorrichtung und den Stossabsorbierelementen;

Figur 3 eine seitliche Schnittansicht durch das Gehäuse des Akkumulators mit einer ersten und zweiten Reihe von Energiespeicherzellen;

Figur 4 eine seitliche Schnittansicht durch das Gehäuse des Akkumulators mit einer ersten, zweiten und dritten Reihe von Energiespeicherzellen;

Figur 5 eine seitliche Schnittansicht durch einen Eckbereich der Gehäuse des Akkumulators und des Stossabsorbierelements;

Figur 6a eine seitliche Schnittansicht durch einen Eckbereich der Gehäuse des Akkumulators und des Stossabsorbierelements gemäß einer ersten Ausführungsform in einem unbelasteten Zustand;

Figur 6b eine Schnittansicht auf die Schnittebene A - A in Figur 6a;

Figur 7a eine seitliche Schnittansicht durch einen Eckbereich der Gehäuse des Akkumulators und des Stossabsorbierelements gemäß einer ersten Ausführungsform in einem teilbelasteten Zustand;

Figur 7b eine Schnittansicht auf die Schnittebene A - A in Figur 7a;

Figur 8a eine seitliche Schnittansicht durch einen Eckbereich der Gehäuse des Akkumulators und des Stossabsorbierelements gemäß einer ersten Ausführungsform in einem vollbelasteten Zustand;

Figur 8b eine Schnittansicht auf die Schnittebene A - A in Figur 8a;

Figur 9a eine seitliche Schnittansicht durch einen Eckbereich der Gehäuse des Akkumulators und des Stossabsorbierelements gemäß einer zweiten Ausführungsform in einem unbelasteten Zustand;

Figur 9b eine Schnittansicht auf die Schnittebene A - A in Figur 9a;

Figur 10a eine seitliche Schnittansicht durch einen Eckbereich der Gehäuse des Akkumulators und des Stossabsorbierelements gemäß einer zweiten Ausführungsform in einem teilbelasteten Zustand;

Figur 10b eine Schnittansicht auf die Schnittebene A - A in Figur 10a;

Figur 11a eine seitliche Schnittansicht durch einen Eckbereich der Gehäuse des Akkumulators und des Stossabsorbierelements gemäß einer zweiten Ausführungsform in einem vollbelasteten Zustand; und

Figur 11b eine Schnittansicht auf die Schnittebene A-A in Figur 11a.

**Ausführunasbeispiel:**

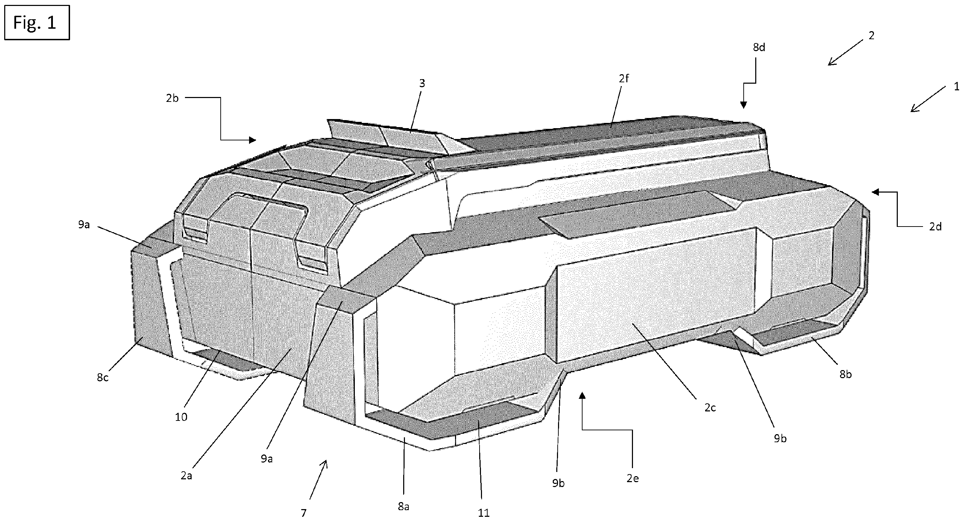

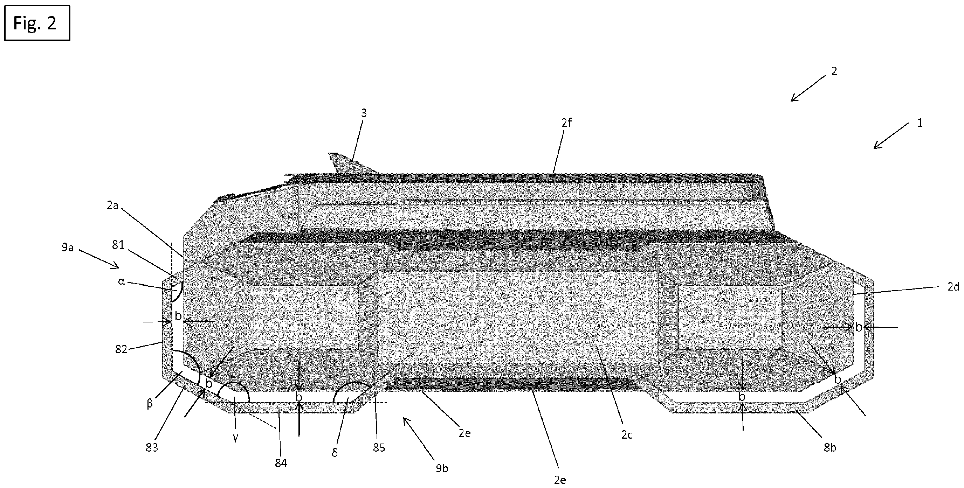

Figur 1 und 2 zeigen einen Akkumulator 1 mit einem Gehäuse 2. Das Gehäuse 2 des Akkumulators 1 kann auch als Akkugehäuse bezeichnet werden und enthält sechs Seitenflächen bzw. sechs Seiten, nämlich eine Frontseitenfläche 2a, eine linke Wandseitenfläche 2b, eine rechte Wandseitenfläche 2c und Rückseitenfläche 2d, eine Unterseitenfläche 2e und eine Oberseitenfläche 2f.

In Figur 1 ist die linke Wandseitenfläche 2b, Rückseitenfläche 2d und Unterseitenfläche 2e lediglich angedeutet.

An einer Oberseitenfläche 2f ist eine Schnittstelle 3 zur Abgabe elektrischer Energie (elektrischer Strom) an einen Verbraucher (z.B. eine Werkzeugmaschine) oder zur Aufnahme von elektrischer Energie durch eine Ladevorrichtung vorgesehen. Mit Hilfe der Schnittstelle 3 kann der Akkumulator 1 mit einer Werkzeugmaschine oder einer Ladevorrichtung wiederlösbar verbunden werden. Weder die Werkzeugmaschine noch die Ladevorrichtung ist in den Figuren gezeigt.

Der in Figur 1 dargestellte Akkumulator 1 dient insbesondere zur Versorgung einer (nicht gezeigten) Werkzeugmaschine mit elektrischer Energie.

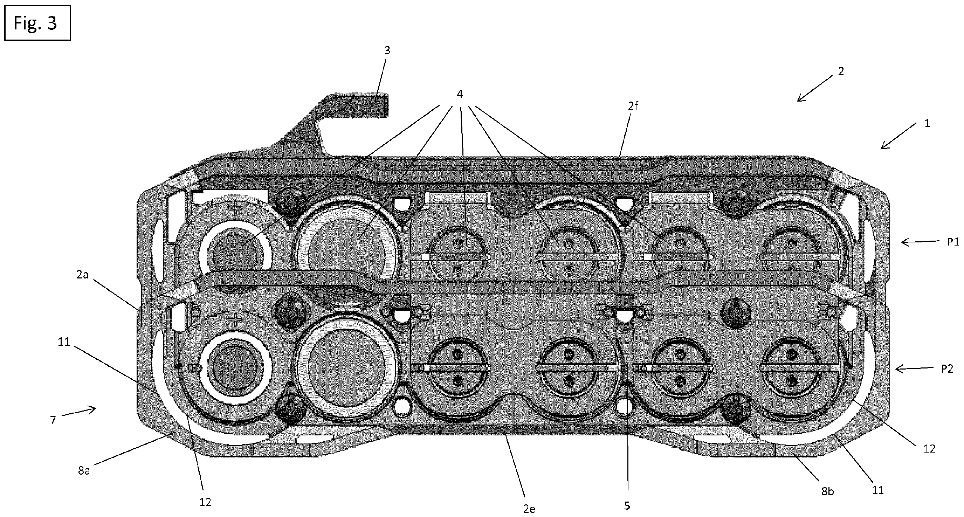

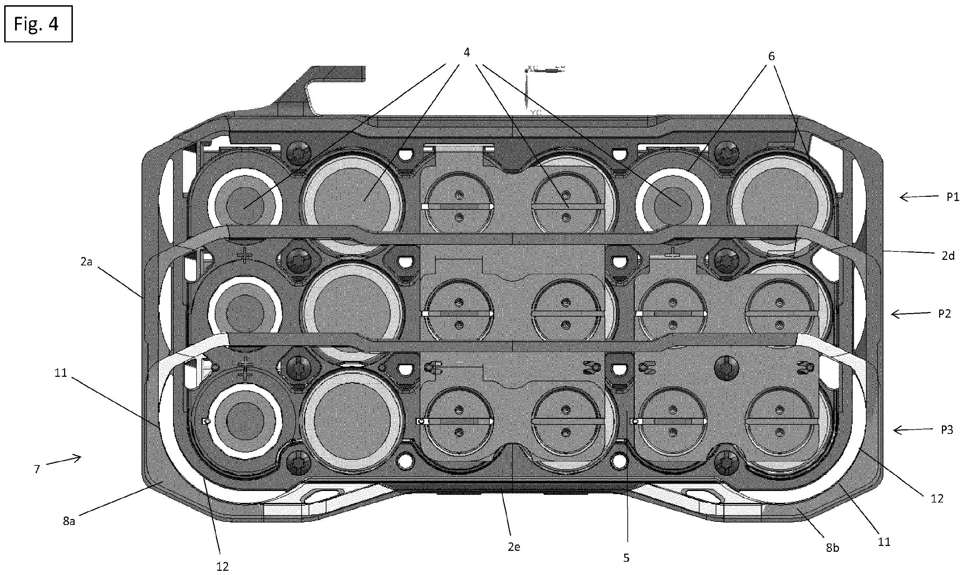

Wie in den Figuren 3 und 4 dargestellt, sind im Inneren des Gehäuses 2 des Akkumulators 1 eine Vielzahl von Energiespeicherzellen 4 enthalten. Die Energiespeicherzellen 4 können auch als Akkuzellen bezeichnet werden und dienen zum Speichern elektrischer Energie. Wie zu erkennen ist, können die Akkuzellen 4 nebeneinander sowie in zwei oder drei Lagen übereinander angeordnet sein. Die Anzahl an Akkuzellen 4 nebeneinander und übereinander ist variabel. Es ist jedoch auch möglich, dass lediglich eine einzige Energiespeicherzelle 4 im Inneren des Gehäuses 2 des Akkumulators 1 vorgesehen ist.

Wie ebenfalls in den Figuren 3 und 4 dargestellt, sind die Energiespeicherzellen 4 zylinderförmig gestaltet und in einer Zellhaltevorrichtung 5 (auch Zellhalter genannt) positioniert. Der sogenannte Zellhalter 5 ist in dem Inneren des Akkugehäuses 2 positioniert. Die Zellhaltevorrichtung 5 ist hierzu im Wesentlichen als Block mit einer Anzahl an Bohrungen 6 ausgestaltet. In diese Bohrungen 6 werden die einzelnen Akkuzellen 4 eingeschoben, sodass die Akkuzellen 4 von der Zellhaltervorrichtung 5 gehalten werden. Die Bohrungen 6 können auch als Aussparungen oder Löcher bezeichnet werden.

Gemäß einer alternativen Ausgestaltungsform können die Energiespeicherzellen 4 auch in Form von sogenannten Pouchzellen (auch Pouch-Bag-Zelle oder Coffee-Bag-Zelle genannt) gestaltet sein.

An dem Gehäuse 2 des Akkumulators 1 ist des Weiteren eine Stossabsorbiervorrichtung 7 enthalten. Gemäß dem Ausführungsbeispiel, welches in den Figuren 1 und 2 gezeigt ist, enthält die Stossabsorbiervorrichtung 7 ein erstes, zweites, drittes und viertes Stossabsorbierelement 8a, 8b, 8c, 8d. Das vierte Stossabsorbierelement 8d ist in den Figuren lediglich angedeutet. Die Ausgestaltung der Stossabsorbierelement 8a, 8b, 8c, 8d ist im Wesentlichen identisch und an deren jeweilige Position an dem Gehäuse 2 des Akkumulators 1 angepasst.

Das erste Stossabsorbierelement 8a ist an einer ersten Ecke des Akkugehäuses 2 positioniert und als Bügel mit einem ersten sowie zweiten Ende 9a, 9b ausgestaltet. Wie in Figur 2 dargestellt enthält das als Bügel ausgestaltete Stossabsorbierelement 8a, 8b, 8c, 8d ein erstes Teilstück 81, ein zweites Teilstück 82, ein drittes Teilstück 83, ein viertes Teilstück 84 sowie ein fünftes Teilstück 85. Das erste Teilstück 81 ist in einem stumpfen Winkel $\alpha$ mit dem zweiten Teilstück 82 verbunden. Das zweite Teilstück 82 ist außerdem in einem stumpfen Winkel $\beta$ mit dem dritten Teilstück 83 verbunden. Das dritte Teilstück 83 ist wiederum in einem stumpfen Winkel $\gamma$ mit dem vierten Teilstück 84 verbunden. Das vierte Teilstück 84 ist schließlich in einem stumpfen Winkel $\delta$ mit dem fünften Teilstück 85 verbunden. Der stumpfe Winkel $\alpha$, $\beta$, $\gamma$, $\delta$ kann einen Wert zwischen 110° und 150° aufweisen. Je nach Bauweise ist jedoch auch ein größerer oder kleinerer Winkel $\alpha$, $\beta$, $\gamma$, $\delta$ möglich. Die Winkel $\alpha$, $\beta$, $\gamma$, $\delta$ müssen nicht denselben Wert enthalten, sodass die Winkel $\alpha$, $\beta$, $\gamma$, $\delta$ unterschiedliche Werte haben können. Es ist auch möglich, dass mehr oder weniger als fünf Teilstücke verwendet werden.

Das erste Ende 9a des als Bügel ausgestalteten Stossabsorbierelements 8a, 8b, 8c, 8d ist dabei an der Frontseitenfläche 2a und das zweite Ende 9b des als Bügel ausgestalteten Stossabsorbierelements 8a, 8b, 8c, 8d ist an der Unterseitenfläche 2e angeordnet. Das als Bügel ausgestaltete Stossabsorbierelement 8a, 8b, 8c, 8d erstreckt sich somit über die Seitenkante 10 zwischen der Frontseitenfläche 2a und der Unterseitenfläche 2e des Akkugehäuses 2 (vgl.

Figur 1 und 2).

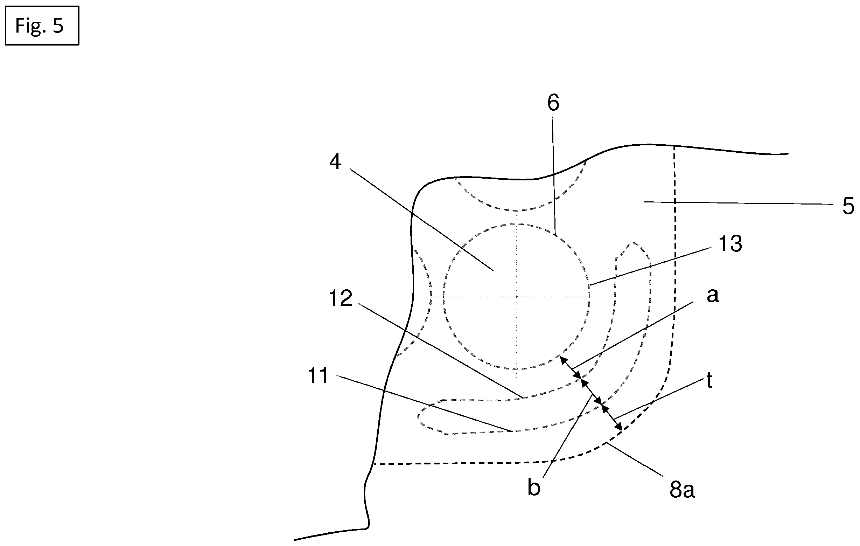

Wie in den Figuren und insbesondere in Figur 5 dargestellt, ist das als Bügel ausgestaltete Stossabsorbierelement 8a, 8b, 8c, 8d so an dem Akkugehäuse 2 positioniert, dass ein konstanter Abstand b (kann auch als Wegstrecke b bezeichnet werden) zwischen der Innenoberfläche 11 des Stossabsorbierelements 8a, 8b, 8c, 8d und der Außenoberfläche 12 des Akkugehäuses 2 vorgesehen ist. Wie insbesondere in den Figuren 5 bis 11b gezeigt, weist das als Bügel ausgestaltete Stossabsorbierelement 8a, 8b, 8c, 8d eine Wandstärke t (auch Stärke oder Dicke genannt) auf.

Darüber hinaus ist das als Bügel ausgestaltete Stossabsorbierelement 8a, 8b, 8c, 8d so an dem Akkugehäuse 2 positioniert, dass ein Abstand a von einer Oberfläche 13 einer Akkuzelle 4 zu der Außenoberfläche 12 des Akkugehäuses 2 vorgesehen ist (vgl. Figur 5).

Das Stossabsorbierelement 8a, 8b, 8c, 8d sowie das Akkugehäuse 2 ist so gestaltet, dass der Abstand a, der Abstand b und die Wandstärke t einen bestimmten Wert sowie in einem bestimmten Verhältnis zueinander ausgebildet sind. Abhängig von dem Typen des verwendeten Akkumulators 1 (Akku-Typ), d.h. von der Anzahl an Reihen bzw. Lagen von Akkuzellen 4 (1p = eine Lage an Akkuzellen; 2p = zwei Lagen an Akkuzellen und 3p = drei Lagen an Akkuzellen) weist der Abstand a, Abstand b und die Wandstärke t die Zahlenwerte der Tabelle 01 auf.

**Tabelle 01**

| Akku- Typ | a (mm) | b (mm) | t (mm) |
|---|---|---|---|
| 1p | 3,5 | 2 | 2,5 |
| 2p | 3,5 | 2 | 2,5 |
| 1p | 4,5 | 3 | 2,5 |
| 2p | 4,5 | 3 | 3 |
| 3p | 4,5 | 3 | 3,5 |

Es ist darüber hinaus das Verhältnis der Zahlenwerte für den Abstand b und die Wandstärke t mit der Formel 01 in ein Verhältnis zueinander zu setzen.

$$\mathbf{0.5 \times b \leq t \geq 2 \times b}$$

**Formel 01**

Wie bereits vorstehend erwähnt, dient das Stossabsorbiervorrichtung 7 und insbesondere das Stossabsorbierelement 8a, 8b, 8c, 8d dazu, eine plötzlich auf das Akkugehäuse 2 einwirkenden Stossenergie im Falle eines Sturzes bzw. Herunterfalls des Akkumulators aufgrund seiner spezifischen physikalischen Eigenschaften in Verformungsenergie zu wandeln und dadurch die im Akkugehäuse 2 angeordneten Akkuzellen 4 vor einer möglichen Beschädigung zu schützen.

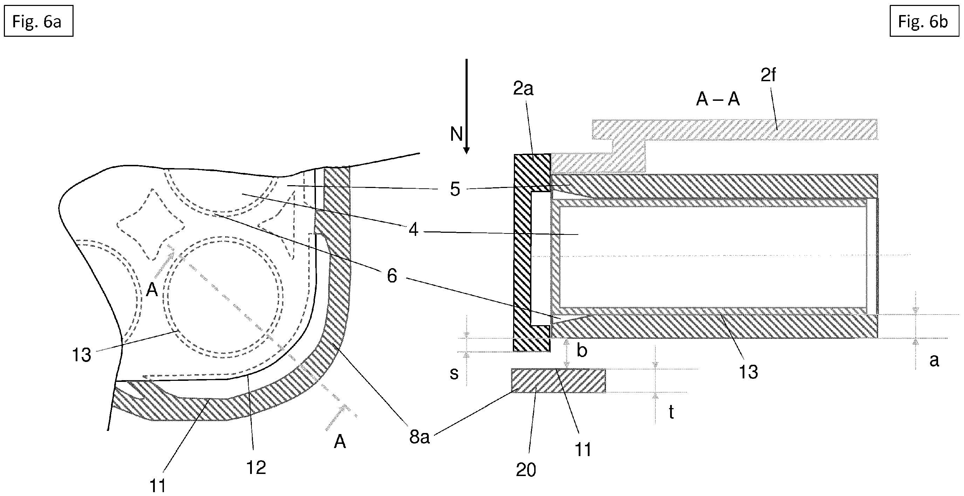

Die eigentliche Verformung des Stossabsorbierelements 8a, 8b, 8c, 8d ist für die jeweilige Ausführungsform der Stossabsorbiervorrichtung 7 in Figuren 6a bis 11b dargestellt.

Die Figuren 6a und 6b zeigen eine Stossabsorbiervorrichtung 7 gemäß einer ersten Ausführungsform, bei der das Stossabsorbierelement 8a eine symmetrische rechteckige Querschnittsfläche 20 aufweist. Figur 6a zeigt dabei eine seitliche Schnittansicht durch einen Eckbereich des Akkugehäuses 2 und des Stossabsorbierelements 8a gemäß der ersten Ausführungsform in einem unbelasteten Zustand. Das Stossabsorbierelement 8a weist einen Abstand b zum Akkugehäuse 2 auf. Figur 6b zeigt eine Schnittansicht auf die Schnittebene A - A in Figur 6a ebenfalls in einem unbelasteten Zustand. Unbelasteter Zustand bedeutet, dass keine Kraft von außen auf das Stossabsorbierelement 8a einwirkt. Wie in Figur 6b auch zu erkennen ist, ragt das Akkugehäuse 2 in Pfeilrichtung N mit einem Überstand s über die Unterkante des Zellhalters 5 hinaus.

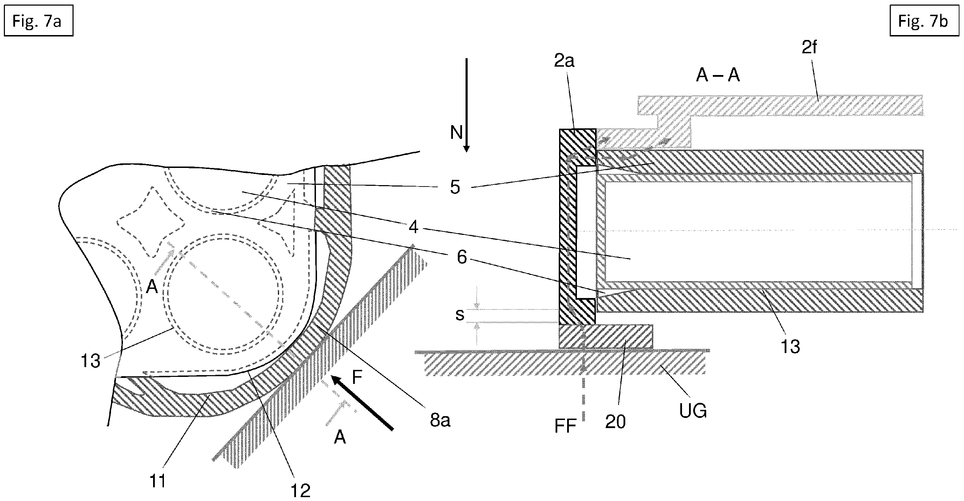

In Figur 7a ist die Stossabsorbiervorrichtung 7 gemäß der ersten Ausführungsform gezeigt, wenn eine erste Kraft F auf das Stossabsorbierelement 8a ausgeübt wird. Die erste Kraft F resultiert aus einem Sturz des Akkumulators 1 und dem Aufprallen des Akkugehäuses 2 auf einen harten, nicht elastischen Untergrund (z.B. Beton). In Figur 7a ist im Vergleich zur Figur 6a zu erkennen, dass das Stossabsorbierelement 8a verformt und zu der Außenoberfläche 12 des Akkugehäuses 2 bewegt wird. Wie in Figur 7b dargestellt ist, liegt die Innenoberfläche 11 des Stossabsorbierelements 8a an der Außenoberfläche 12 des Akkugehäuses 2 an, sodass die Stossenergie bzw. der Kraftfluss FF von dem Stossabsorbierelement 8a über die Frontseitenfläche 2a in die Oberseitenfläche 2f des Akkugehäuses 2 sowie teilweise in den Zellhalter 5 abgeleitet und um die Akkuzellen 4 herumgeleitet wird. Wie Figur 7b ebenfalls zu entnehmen ist, wird die Frontseitenfläche 2a des Akkugehäuses 2 nicht komprimiert, sodass der Überstand s des Akkugehäuses 2 noch besteht.

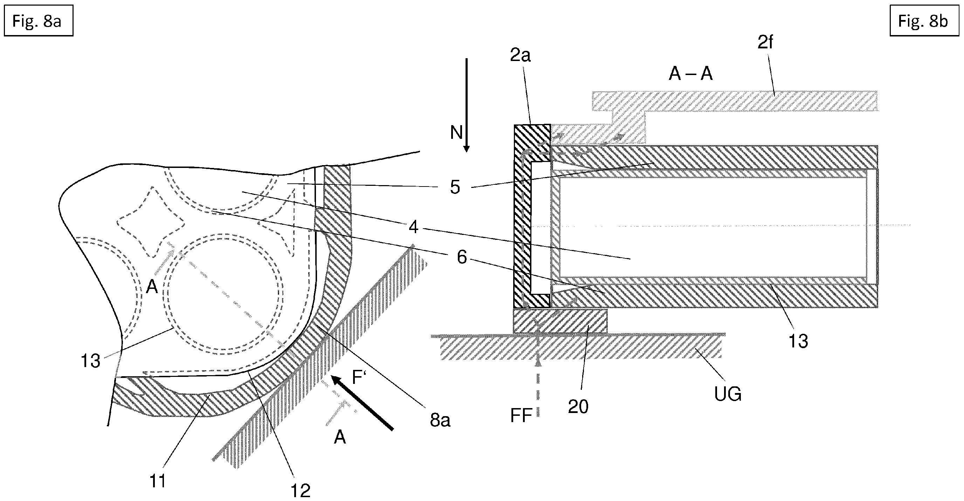

In Figur 8a und 8b ist die Stossabsorbiervorrichtung gemäß der ersten Ausführungsform gezeigt, wenn eine zweite Kraft F', welche größer als die erste Kraft F ist, auf das Stossabsorbierelement 8a ausgeübt wird. Die auf das Stossabsorbierelement 8a ausgeübte zweite Kraft F' bewirkt, dass das Stossabsorbierelement 8a stärker gegen die Frontseitenfläche 2a des Akkugehäuses 2 gedrückt wird. Aufgrund der höheren zweiten Kraft F' wird die Frontseitenfläche 2a des Akkugehäuses 2 komprimiert, sodass der Überstand s des Akkugehäuses 2 eingedrückt wird. Durch das Eindrücken des Überstands s wird zusätzlich Stossenergie bzw. Aufprallenergie von dem Akkugehäuse 2 absorbiert und die Akkuzellen 4 zusätzlich geschützt.

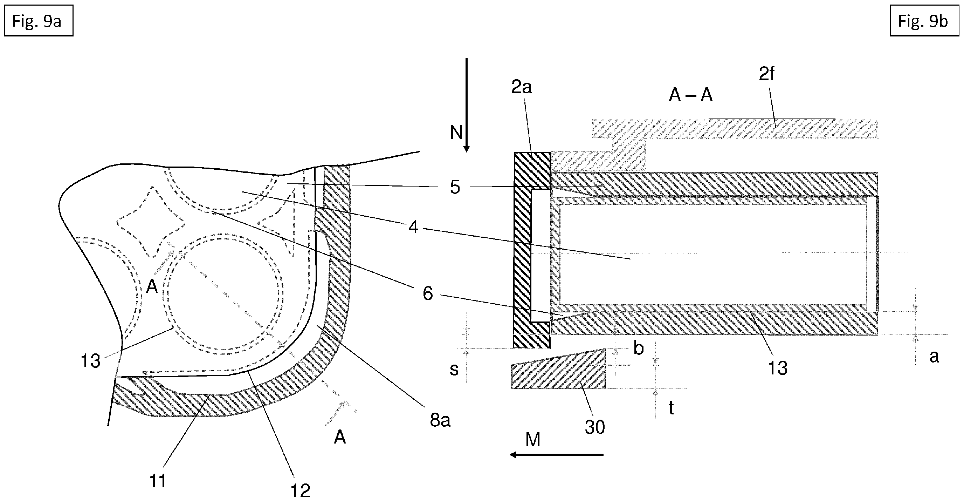

Die Figuren 9a und 9b zeigen eine Stossabsorbiervorrichtung 7 gemäß einer zweiten Ausführungsform, bei der das Stossabsorbierelement 8a eine asymmetrische bzw. trapezförmige (auch keilförmige genannt) Querschnittsfläche 30 aufweist. Die Querschnittsfläche 30 ist dabei so ausgestaltet, dass die kürzere Seitenfläche der als Trapez ausgestalteten Querschnittsfläche in Pfeilrichtung M liegt. Mit anderen Worten: die kürzere Seitenfläche des Trapezes (bzw. der als Trapez ausgestalteten Querschnittsfläche 30) weist zu der Frontseitenfläche 2a des Akkugehäuses 2.

Figur 9a zeigt eine seitliche Schnittansicht durch einen Eckbereich des Akkugehäuses 2 und des Stossabsorbierelements gemäß der zweiten Ausführungsform in einem unbelasteten Zustand. Das Stossabsorbierelement 8a weist einen Abstand b zum Akkugehäuse auf. Figur 9b zeigt eine Schnittansicht auf die Schnittebene A - A in Figur 9a ebenfalls in einem unbelasteten Zustand. Unbelasteter Zustand bedeutet, dass keine Kraft von außen auf das Stossabsorbierelement 8a einwirkt. Wie in Figur 9b auch zu erkennen ist, ragt das Akkugehäuse 2 in Pfeilrichtung N mit einem Überstand s über die Unterkante des Zellhalters 5 hinaus.

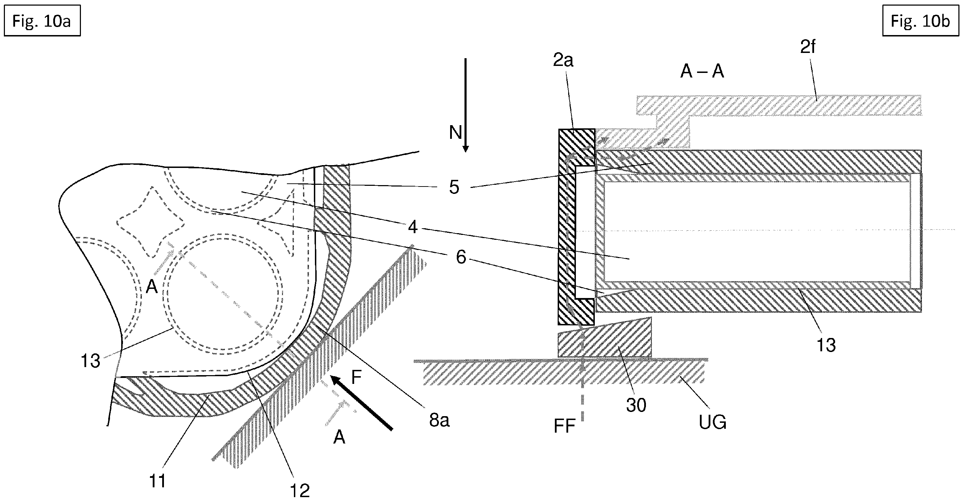

In Figur 10a ist die Stossabsorbiervorrichtung 7 gemäß der zweiten Ausführungsform gezeigt, wenn eine erste Kraft F auf das Stossabsorbierelement 8a ausgeübt wird. Die erste Kraft F resultiert aus einem Sturz des Akkumulators 1 und dem Aufprallen des Akkugehäuses 2 auf einen harten, nicht elastischen Untergrund UG (z.B. Beton). In Figur 10a ist im Vergleich zur Figur 9a zu erkennen, dass das Stossabsorbierelement verformt und zu der Oberfläche des Akkugehäuses bewegt wird. Wie in Figur 10b dargestellt ist, liegt die Innenoberfläche 11 des Stossabsorbierelements 8a an der Außenoberfläche 12 des Akkugehäuses 2 an, sodass die Stossenergie bzw. der Kraftfluss FF von dem Stossabsorbierelement 8a über die Frontseitenfläche 2a in die Oberseitenfläche 2f des Akkugehäuses 2 sowie teilweise in den Zellhalter 5 abgeleitet und um die Akkuzellen 4 herumgeleitet wird. Wie Figur 10b ebenfalls zu entnehmen ist, wird die Frontseitenfläche 2a des Akkugehäuses 2 nicht komprimiert, sodass der Überstand s des Akkugehäuses 2 noch besteht.

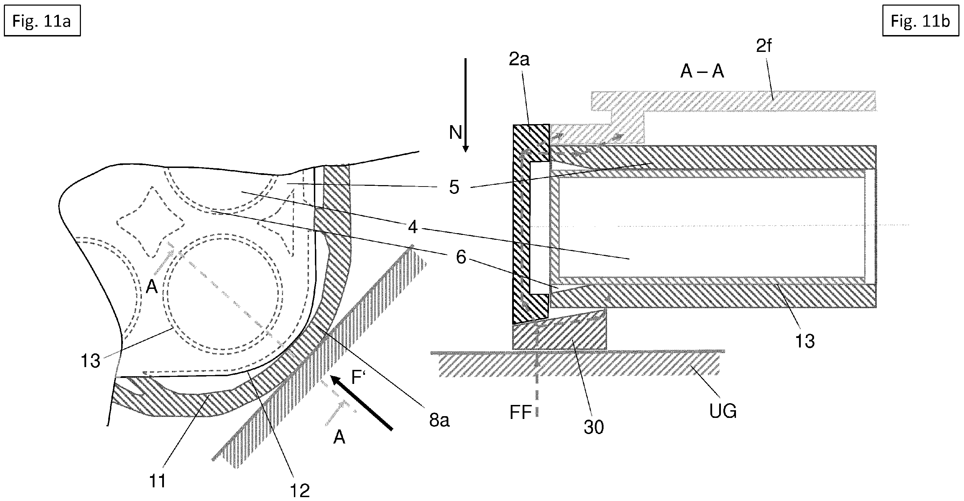

In Figur 11a und 11b ist die Stossabsorbiervorrichtung 7 gemäß der zweiten Ausführungsform gezeigt, wenn eine zweite Kraft F', welche größer als die erste Kraft F ist, auf das Stossabsorbierelement 8a ausgeübt wird. Die auf das Stossabsorbierelement 8a ausgeübte zweite Kraft F' bewirkt, dass das Stossabsorbierelement 8a stärker gegen die Frontseitenfläche 2a des Akkugehäuses 2 gedrückt wird. Aufgrund der höheren zweiten Kraft F' wird die Frontseitenfläche 2a des Akkugehäuses 2 komprimiert, sodass der Überstand s des Akkugehäuses 2 eingedrückt wird. Durch das Eindrücken des Überstands s wird zusätzlich Stossenergie bzw. Aufprallenergie von dem Akkugehäuse 2 absorbiert und die Akkuzellen 4 zusätzlich geschützt.

## Bezugszeichenliste

| | |
|---|---|
| 1: | Akkumulator |
| 2: | Gehäuse des Akkumulators |
| 2a: | Frontseitenfläche |
| 2b: | linke Wandseitenfläche |
| 2c: | rechte Wandseitenfläche |
| 2d: | Rückseitenfläche |
| 2e: | Unterseitenfläche |
| 2f: | Oberseitenfläche |
| 3: | Schnittstelle |
| 4: | Energiespeicherzelle |
| 5: | Zellhaltevorrichtung |
| 6: | Bohrungen |
| 7: | Stossabsorbiervorrichtung |
| 8a, 8b, 8c, 8d: | Stossabsorbierelement |
| 9a: | erstes Ende des als Bügel ausgestalteten Stossabsorbierelements |
| 9b: | zweites Ende des als Bügel ausgestalteten Stossabsorbierelements |

| | |
|---|---|
| 10: | Seitenkante zwischen der Frontseitenfläche und der Unterseitenfläche des Akkugehäuses |
| 11: | Innenoberfläche des Stossabsorbierelements |
| 12: | Außenoberfläche des Akkugehäuses |
| 13: | Oberfläche einer Energiespeicherzelle |
| 20: | symmetrische rechteckige Querschnittsfläche des Stossabsorbierelements |
| 30: | trapezförmige Querschnittsfläche |
| 81: | erstes Teilstück des als Bügel ausgestalteten Stossabsorbierelements |
| 82: | zweites Teilstück des als Bügel ausgestalteten Stossabsorbierelements |
| 83: | drittes Teilstück des als Bügel ausgestalteten Stossabsorbierelements |
| 84: | viertes Teilstück des als Bügel ausgestalteten Stossabsorbierelements |
| 85: | fünftes Teilstück des als Bügel ausgestalteten Stossabsorbierelements |
| $\alpha$, $\beta$, $\gamma$, $\delta$: | stumpfe Winkel zwischen Teilstücken des als Bügel ausgestalteten Stossabsorbierelements |
| UG: | Untergrund |
| FF: | Kraftfluss |
| F: | erste Kraft |
| F’: | zweite Kraft |

**Patentansprüche**

1. Stossabsorbiervorrichtung (7) für einen Akkumulator (1), insbesondere zur Versorgung einer Werkzeugmaschine mit elektrischer Energie, wobei der Akkumulator (1) ein Gehäuse (2) enthält zum Aufnehmen wenigstens einer Energiespeicherzelle (4),
**dadurch gekennzeichnet, dass** die Stossabsorbiervorrichtung (7) wenigstens ein Stossabsorbierelement (8a, 8b, 8c, 8d) zum Absorbieren einer auf das Gehäuse (2) des Akkumulators (1) ausgeübten Stossenergie enthält.

2. Stossabsorbiervorrichtung (7) nach Anspruch 1,
**dadurch gekennzeichnet, dass** sich das wenigstens eine Stossabsorbierelement (8a, 8b, 8c, 8d) von einer ersten Seitenfläche des Gehäuses (2) des Akkumulators (1) zu einer zweiten Seitenfläche des Gehäuses (2) des Akkumulators (1) erstreckt.

3. Stossabsorbiervorrichtung (7) nach Anspruch 1 oder 2,
**dadurch gekennzeichnet, dass** das wenigstens eine Stossabsorbierelement (8a, 8b, 8c, 8d) in Form eines Bügels ausgestaltet ist.

4. Stossabsorbiervorrichtung (7) nach Anspruch 3,
**dadurch gekennzeichnet, dass** das als Bügel ausgestaltete Stossabsorbierelement (8a, 8b, 8c, 8d) ein erstes Ende (9a) sowie ein zweites Ende (9b) enthält, wobei das erste Ende (9a) an einer ersten Seitenfläche (2a, 2b, 2c, 2d, 2e, 2f) des Gehäuses (2) und das zweite Ende (9b) an einer zweiten Seitenfläche (2a, 2b, 2c, 2d, 2e, 2f) des Gehäuses (2) positioniert ist.

5. Stossabsorbiervorrichtung (7) nach wenigstens einem der Ansprüche 1 bis 4,
**dadurch gekennzeichnet, dass** ein im Wesentlich konstanter Abstand (b) zwischen der Innenoberfläche (11) des Stossabsorbierelements (8a, 8b, 8c, 8d) und einer Außenoberfläche (12) des Gehäuses (2) des Akkumulators (1) vorgesehen ist.

6. Stossabsorbiervorrichtung (7) nach wenigstens einem der Ansprüche 3 bis 5,
**dadurch gekennzeichnet, dass** das als Bügel ausgestaltete Stossabsorbierelement (8a, 8b, 8c, 8d) so an dem Gehäuse (2) positioniert ist, dass sich ein Bogenabschnitt des als Bügel ausgestaltete Stossabsorbierelements (8a, 8b, 8c, 8d) um eine Seitenkante (10) von zwei aneinandergrenzende Seitenflächen (2a, 2b, 2c, 2d, 2e, 2f) des Gehäuses (2) erstreckt.

7. Stossabsorbiervorrichtung (7) nach wenigstens einem der Ansprüche 3 bis 6,
**dadurch gekennzeichnet, dass** das als Bügel ausgestaltete Stossabsorbierelement (8a, 8b, 8c, 8d) wenigstens zwei Teilstücke (81, 82, 83, 84, 85), insbesondere fünf Teilstücke, (81, 82, 83, 84, 85) enthält, wobei jeweils zwei aneinandergrenzende Teilstücke (81, 82, 83, 84, 85) in einem stumpfen Winkel ($\alpha$, $\beta$, $\gamma$, $\delta$) zueinander angeordnet sind.

**8.** Stossabsorbiervorrichtung (7) nach wenigstens einem der Ansprüche 3 bis 7, **dadurch gekennzeichnet, dass** das als Bügel ausgestaltete Stossabsorbierelement (8a, 8b, 8c, 8d) kreisbogenförmig ausgestaltet ist.

1
2
2d
8b
9b
8d
2c
2f
2e
9b
11
3
8a
7
9a
2a
2b
10
8c
9a

Fig. 1

1
2
2d
b
b
8b
b
2c
2f
2e
2e
9b
3
85
δ
b
84
γ
b
b
2a
81
α
82
β
83
9a

Fig. 2

1
2
P1
P2
12
11
8b
2f
5
2e
4
3
12
2a
11
7
8a

Fig. 3

P1
2d
P2
P3
12
11
8b
6
5
4
2e
12
2a
11
7
8a

Fig. 4

5
13
a
t
8a
6
b
4
12
11

Fig. 5

Fig. 6b
A – A
2f
13
a
t
b
11
2a
20
N
5
4
6
s
8a
A
12
11
A
13
Fig. 6a

Fig. 7b
2f
A – A
13
UG
20
2a
FF
N
5
4
6
s
8a
F
A
12
11
13
A
Fig. 7a

Fig. 8b
A – A
2f
13
UG
2a
20
FF
N
5
4
6
8a
F'
A
12
11
13
A
Fig. 8a

Fig. 9b
A – A
2f
13
a
t
b
30
M
2a
5
4
6
N
s
8a
A
12
11
13
A
Fig. 9a

Fig. 10b
2f
A – A
13
UG
30
2a
FF
N
5
4
6
8a
F
A
12
11
13
A
Fig. 10a

Fig. 11b
A – A
2f
13
UG
30
FF
2a
N
5
4
6
8a
F'
A
12
11
13
A
Fig. 11a

Europäisches Patentamt
European Patent Office
Office européen des brevets

# EUROPÄISCHER RECHERCHENBERICHT

Nummer der Anmeldung
EP 19 16 4821

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 085 499 A1 (HILTI AG [LI]) 26. Oktober 2016 (2016-10-26) * Absatz [0022] - Absatz [0036]; Abbildungen 1-9 * | 1-8 | INV. H01M2/10 B25F5/00 |
| X | US 2005/058890 A1 (BRAZELL KENNETH [US] ET AL) 17. März 2005 (2005-03-17) * Absätze [0031] - [0034], [0039] - [0052]; Abbildungen 1-16 * | 1-8 | |
| X | EP 3 428 993 A1 (OUTOKUMPU OY [FI]) 16. Januar 2019 (2019-01-16) * Absätze [0014] - [0028], [0049] - [0060]; Abbildungen 1-12 * | 1-8 | |
| X | US 2016/229308 A1 (NUSIER SAIED [US] ET AL) 11. August 2016 (2016-08-11) * Absatz [0025] - Absatz [0034]; Abbildungen 1-4 * | 1-8 | |

RECHERCHIERTE SACHGEBIETE (IPC)

B25F
H01M

Der vorliegende Recherchenbericht wurde für alle Patentansprüche erstellt

1

| Recherchenort | Abschlußdatum der Recherche | Prüfer |
|---|---|---|
| München | 17. Juli 2019 | Tsipouridis, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 19 16 4821

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2019

| Im Recherchenbericht angeführtes Patentdokument | Datum der Veröffentlichung | Mitglied(er) der Patentfamilie | Datum der Veröffentlichung |
|---|---|---|---|
| EP 3085499 A1 | 26-10-2016 | CN 107210399 A | 26-09-2017 |
| | | EP 3085499 A1 | 26-10-2016 |
| | | EP 3285970 A1 | 28-02-2018 |
| | | US 2018193995 A1 | 12-07-2018 |
| | | WO 2016170120 A1 | 27-10-2016 |
| US 2005058890 A1 | 17-03-2005 | AT 471229 T | 15-07-2010 |
| | | AU 2004212521 A1 | 07-04-2005 |
| | | CA 2481740 A1 | 15-03-2005 |
| | | CN 1658408 A | 24-08-2005 |
| | | EP 1516702 A2 | 23-03-2005 |
| | | US 2005058890 A1 | 17-03-2005 |
| EP 3428993 A1 | 16-01-2019 | KEINE | |
| US 2016229308 A1 | 11-08-2016 | CN 205488288 U | 17-08-2016 |
| | | RU 2016104042 A | 14-08-2017 |
| | | US 2016229308 A1 | 11-08-2016 |
| | | US 2017217330 A1 | 03-08-2017 |

EPO FORM P0461

Für nähere Einzelheiten zu diesem Anhang : siehe Amtsblatt des Europäischen Patentamts, Nr.12/82